(19) Europäisches Patentamt
European Patent Office
Office européen des brevets

(11) EP 2 468 794 A1

# (12) EUROPÄISCHE PATENTANMELDUNG

(43) Veröffentlichungstag:
**27.06.2012 Patentblatt 2012/26**

(21) Anmeldenummer: **10196967.3**

(22) Anmeldetag: **24.12.2010**

(51) Int Cl.:
***C08G 59/40*** (2006.01)
***C08G 59/68*** (2006.01)
***C08L 63/00*** (2006.01)
***B32B 3/26*** (2006.01)
***C08J 5/08*** (2006.01)
***C08J 9/22*** (2006.01)
***C09J 163/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sika Technology AG**
**6340 Baar (CH)**

(72) Erfinder:
- **Frick, Karsten**
  **5453 Remetschwil (CH)**
- **Bordeanu, Nicolae**
  **8400 Winterthur (CH)**
- **Hoefflin, Frank**
  **5400 Baden (CH)**

(74) Vertreter: **Sika Patent Attorneys**
**c/o Sika Technology AG**
**Tüffenwies 16-22**
**8048 Zürich (CH)**

## (54) Lagerstabile hitzehärtende Granulatmischung

(57) Die vorliegende Erfindung betrifft eine hitzehärtende Granulatmischung, welche ein erstes Granulat (**G1**) sowie ein zweites, epoxidfreies, Granulat (**G2**) umfasst. Das zweite, epoxidfreie, Granulat (**G2**) umfasst mindestens einen hitzeaktivierbaren Beschleuniger (**B**) für die Härtung von Epoxid-Festharz (**A**) mit Dicyandiamid, mindestens ein bei Raumtemperatur fester Thermoplast (**T**) mit einem Erweichungspunkt von zwischen 70°C und 140°C gemessen nach der Ring & Kugel-Methode gemäss DIN EN 1238. Des Weiteren umfasst die hitzehärtende Granulatmischung umfasst Dicyandiamid, welches Teil des ersten (**G1**) und/oder des zweiten (**G2**) Granulates ist, sowie mindestens ein hitzeaktivierbares Treibmittel (**TM**), welches unabhängig von einander Teil des ersten (**G1**) und/oder des zweiten (**G2**) Granulates ist.

Die hitzehärtende Granulatmischung zeichnet sich durch eine ausserordentliche Lagerstabilität und ein gutes Schäumungsverhalten aus.

EP 2 468 794 A1

## Beschreibung

### Technisches Gebiet

Die Erfindung betrifft das Gebiet der hitzehärtenden Epoxidharzzusammensetzungen, insbesondere für den Einsatz zur Herstellung von strukturellen Schäumen.

### Stand der Technik

Hitzehärtende Epoxidharze werden schon seit längerem eingesetzt zur Herstellung von verstärkten Strukturen. Insbesondere werden derartige Epoxidharzzusammensetzungen zur Herstellung von Baffles und Reinforcern im Automobilbau eingesetzt. Hierzu werden Epoxidharzformteile insbesondere durch Extrusion hergestellt. Zur Schäumung dieser Formteile werden Epoxidharzzusammensetzungen verwendet, welche hitzeaktivierbare Treibmittel enthalten. Damit eine effiziente Aushärtung erfolgen kann, wird üblicherweise ein hitzeaktivierbarer Beschleuniger eingesetzt. Üblicherweise wird die hitzehärtende Epoxidharzzusammensetzung als Granulat hergestellt und für die Formgebung insbesondere durch Extrusion verwendet. Hierbei hat sich jedoch gezeigt, dass derartige Epoxidharzzusammensetzungen bei Raumtemperatur nicht lagerstabil sind und vorzeitig aus- bzw. anhärten. Dies ist sehr nachteilig, da der Nachschub sehr genau und termingerecht erfolgen muss, was natürlich vielfach sehr schwierig ist. Insbesondere hat sich gezeigt, dass in Fällen, wo plötzlich, bzw. unerwartet, die Herstellungszahl von zu produzierenden Automobilen zurückging, die für die Herstellung der Formteile benötigten Epoxidharzzusammensetzungen überlagert und damit nicht mehr brauchbar wurden. Dies hat sich beispielsweise im Jahr 2009 als grosser Nachteil von bestehenden hitzehärtenden und schäumbaren Epoxidharzzusammensetzungen, bzw. Epoxidharzgranulaten, gezeigt.

### Darstellung der Erfindung

Die Aufgabe der vorliegenden Erfindung ist es daher, eine Darreichungsform von hitzehärtenden und schäumbaren Epoxidharzzusammensetzungen zur Verfügung zu stellen, welche über eine verbesserte Lagerstabilität und trotzdem über ein gutes Expansionsverhalten verfügen.
Überraschenderweise wurde nun gefunden, dass hitzehärtende Granulatmischungen gemäss Anspruch 1 diese Aufgabe lösen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine hitzehärtende Granulatmischung, welche

a) ein erstes Granulat (**G1**) sowie
b) ein zweites, epoxidfreies, Granulat (**G2**) umfasst.
Das erste Granulat (**G1**) seinerseits umfasst mindestens ein Epoxid-Festharz (**A**) mit durchschnittlich mehr als einer Epoxidgruppe pro Molekül.
Das zweite, epoxidfreie, Granulat (**G2**) umfasst

- mindestens einen hitzeaktivierbaren Beschleuniger (**B**) für die Härtung von Epoxid-Festharz (**A**) mit Dicyandiamid,
- mindestens ein bei Raumtemperatur fester Thermoplast (**T**) mit einem Erweichungspunkt von zwischen 70°C und 140°C gemessen nach der Ring & Kugel-Methode gemäss DIN EN 1238.
  Weiterhin umfasst die hitzehärtende Granulatmischung

c) Dicyandiamid, welches Teil des ersten (**G1**) und/oder des zweiten (**G2**) Granulates ist;
sowie
d) mindestens ein hitzeaktivierbares Treibmittel (**TM**), welches unabhängig von einander Teil des ersten (**G1**) und/oder des zweiten (**G2**) Granulates ist.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Molekulargewicht" bezeichnet im vorliegenden Dokument das Molekulargewichtsmittel $M_n$.

Als Raumtemperatur wird im vorliegenden Dokument eine Temperatur von 25°C verstanden.

Die fett markierten Bezeichnungen wie **A, B, T, TM, PUP, G1, G2, A', SM, SM1, SM2, SM3, F** oder dergleichen im vorliegenden Dokument dienen lediglich für das bessere Leseverständnis und Identifizierung.

Als "Epoxidgruppe" oder "Epoxygruppe" wird das Strukturelement

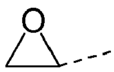

oder

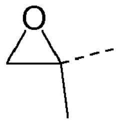

bezeichnet.

Als "Glycidylether" wird ein Ether von 2,3-Epoxy-1-propanol (Glycidol) bezeichnet.

Die gestrichelten Linien in den Formeln dieses Dokumentes stellen jeweils die Bindung zwischen dem jeweiligen Substituenten und dem dazugehörigen Molekülrest dar.

Unter "lagerstabil" oder "lagerfähig" wird im folgenden Dokument verstanden, dass sich das Granulat, bzw. die Granulatmischung, während einer Lagerzeit vom mindestens 3 Monaten, insbesondere von mindestens 6 Monaten, bevorzugt mindestens 9 Monaten, bei Raumtemperatur nicht vorzeitig aus- oder anhärtet, insbesondere, dass die Verarbeitbarkeit nur unwesentlich verändert wird.

Unter einem Granulat wird in diesem Dokument ein bei Raumtemperatur festes, rieselfähiges Material verstanden.

Das erste Granulat (**G1**) umfasst mindestens ein Epoxid-Festharz (**A**) mit durchschnittlich mehr als einer Epoxidgruppe pro Molekül. Es ist für das Wesen der Erfindung wesentlich, dass es sich beim Epoxid-Festharz als zwingenden Bestandteil des ersten Granulates handelt und sich damit vom Epoxid-Flüssigharz abhebt. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

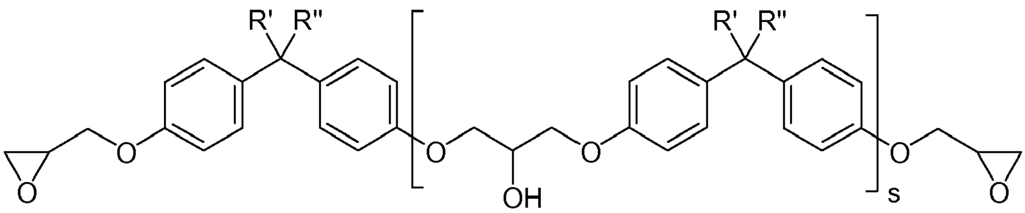

(X)

Hierbei stehen die Substituenten R' und R" unabhängig voneinander entweder für H oder $CH_3$. Weiterhin steht der Index s für einen Wert von > 1.5, insbesondere von 2 bis 12.

Derartige Epoxid-Festharze sind kommerziell erhältlich, beispielsweise von Dow, Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Zusätzlich kann zuweilen von Vorteil sein, wenn das erste Granulat (**G1**) zu geringen Teilen, d.h. weniger als

20 Gew.-%, insbesondere weniger als 10 Gew.-%, bezogen auf das Gewicht des Epoxid-Festharzes (**A**), neben dem Epoxid-Festharz auch noch Epoxid-Flüssigharz (**A'**) enthält.

Bevorzugte Epoxid- Flüssigharz (**A'**) weisen die Formel (XI) auf

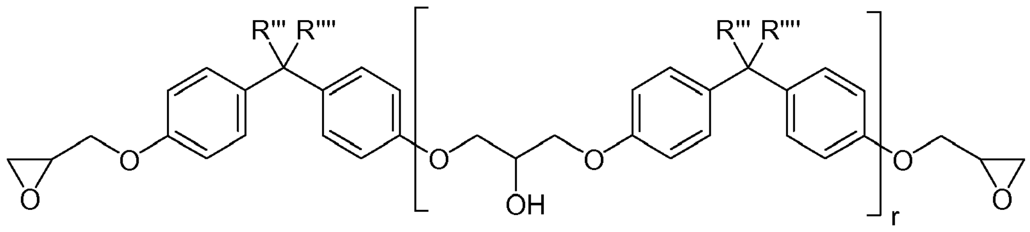

(XI)

Hierbei stehen die Substituenten R''' und R'''' unabhängig voneinander entweder für H oder $CH_3$. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ‚A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxid-Festharz (**A**) sind sogenannte Novolake, welche bei Raumtemperatur fest sind. Diese weisen insbesondere die folgende Formel auf:

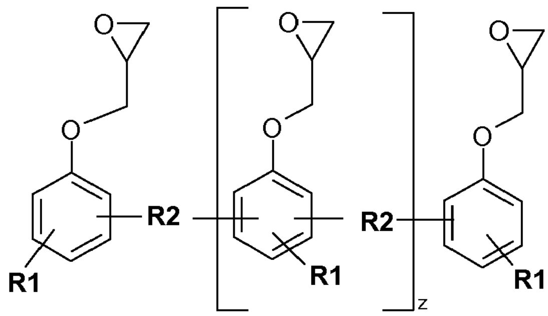

mit R2=

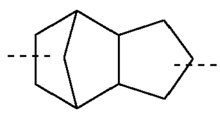

oder $CH_2$, R1 = H oder Methyl und z = 0 bis 7.

Insbesondere handelt es sich hierbei um Phenol- oder Kresol-Novolake (**R2** = $CH_2$).

Solche Epoxidharze sind unter dem Handelnamen EPN oder ECN sowie Tactix® 556 von Huntsman oder unter der Produktereihe D.E.N.™ von Dow Chemical kommerziell erhältlich, beispielsweise D.E.N.™ 354, 431 und 438.

Für das Wesen der vorliegenden Erfindung ist es wesentlich, dass das zweite Granulat (**G2**) epoxidfrei ist und insbesondere kein Epoxid-Festharz (**A**) oder Epoxid-Flüssigharz (**A'**) aufweist.

Das zweite, epoxidfreie, Granulat (**G2**) weist mindestens einen hitzeaktivierbaren Beschleuniger (**B**) für die

Härtung von Epoxid-Festharz (**A**) mit Dicyandiamid auf.

Diese hitzeaktivierbaren Beschleuniger (**B**) werden durch Erhitzen aktiviert. Bei den hitzeaktivierbaren Beschleunigern (**B**) handelt es sich insbesondere um Guanamine, Guanidine, Aminoguanidine und deren Derivate; substituierte Harnstoffe, Imidazole und Imidazol-Salze, Imidazoline, Amidoamine sowie Iminoamine.

Als hitzeaktivierbarer Beschleuniger (**B**) besonders bevorzugt sind substituierte Harnstoffe, insbesondere 3-(3-Chlor-4-methylphenyl)-1,1-dimethylharnstoff (Chlortoluron), oder Aryl-dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff), sowie Imidazole und Imidazol-Salze.

Das zweite, epoxidfreie, Granulat (**G2**) weist weiterhin mindestens ein bei Raumtemperatur fester Thermoplast (**T**) mit einem Erweichungspunkt von zwischen 70°C und 140°C gemessen nach der Ring & Kugel-Methode gemäss DIN EN 1238 auf.

Als Thermoplaste geeignet sind insbesondere bei Raumtemperatur feste Polyolefine, Kohlenwasserstoffharze sowie Copolymere, welche aus der radikalischen Polymerisation von mindestens zwei Monomeren mit mindestens einer, vorzugsweise einer, ungesättigten C=C-Doppelbindung erhalten werden.

Als Polyolfine sind insbesondere Poly-α-olefine, insbesondere Polyethylene, geeignet.

Unter einem "α-Olefin" wird in diesem Dokument in üblicher Definition ein Alken der Summenformel $C_xH_{2x}$ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Unter "Poly-α-olefinen" werden in diesem Dokument in üblicher Definition Homopolymere aus α-Olefinen und Copolymere aus mehreren verschiedenen α-Olefinen verstanden. Ataktische Poly-α-olefine (APAO) weisen im Vergleich zu anderen Polyolefinen eine amorphe Struktur auf. Bevorzugt weisen diese ataktischen Poly-α-olefine einen Erweichungspunkt von über 90°C, insbesondere zwischen 90°C und 130°C auf. Das Molekulargewicht $M_n$ beträgt insbesondere zwischen 7'000 und 25'000 g/mol. Besonders bevorzugte ataktische Poly-α-olefine sind unter dem Handelsnamen Vestoplast® von Degussa erhältlich.

Besonders bevorzugt sind Propylen-reiche ataktisches Poly-α-olefine sowie teilkristalline Propylene-Ethylen-Butylen-Terpolymere.

Weiterhin sind insbesondere niedermolekulare Polyethylene geeignet, welche ein Molekulargewicht ($M_n$) von weniger als 2000 g/mol aufweisen.

In einer weiteren Ausführungsform ist der bei Raumtemperatur feste Thermoplast (**T**) ein bei Raumtemperatur festes Copolymer, welches aus der radikalischen Polymerisation von mindestens zwei Monomeren mit mindestens einer, vorzugsweise einer, ungesättigten C=C-Doppelbindung erhalten wird, bevorzugt ein Ethylen/Vinylacetat-Copolymer. Bevorzugt haben sich Ethylen / Vinylacetat-Copolymere (EVA) erwiesen, insbesondere solche mit einem Vinylacetat-Anteil von unter 50%, insbesondere mit einem Vinylacetat-Anteil zwischen 10 und 40%, bevorzugt 15 bis 30 %. Entsprechende Ethylen/ Vinylacetat-Copolymere sind bespielsweise von der Firma DuPont unter dem Handelsnamen Elvax®, beispielsweise die Elvax® 200-er Serie oder Elvax® 4310 oder Elvax® 4320 erhältlich.

Weiterhin umfasst entweder das erste (**G1**) und/oder das zweite (**G2**) Granulat Dicyandiamid.

Es ist bevorzugt, dass das Dicyandiamid in feinteiliger Form vorliegt und eine mittlere Teilchengrösse von kleiner als 12 μm, insbesondere von 1 bis 10 μm, bevorzugt zwischen 5 und 9 μm, aufweist. Die Teilchengrösse wird hierbei mittels Sieb bestimmt. Derartige Typen von Dicyandiamid werden auch als "mikronisiert" bezeichnet und kommerziell angeboten.

Weiterhin umfasst entweder das erste (**G1**) und/oder das zweite (**G2**) Granulat ein hitzeaktivierbares Treibmittel (**TM**). Bevorzugte Treibmittel (**TM**) sind chemische Treibmittel, welche beim Erhitzen, insbesondere auf eine Temperatur von 100 bis 200 °C, ein Gas freisetzen.

Es kann sich hierbei um exotherme Treibmittel (**TM**) handeln, wie beispielsweise Azoverbindungungen, Hydrazinderivate, Semicarbazide oder Tetrazole handeln. Bevorzugt sind Azodicarbonamid und 4,4'-Oxybis(benzolsulfonhydrazid), die bei der Zersetzung Energie freisetzen. Weiterhin geeignet sind auch endotherme Treibmittel, wie beispielsweise Natriumbicarbonat / Zitronensäure - Mischungen. Derartige chemische Treibmittel sind beispielsweise unter dem Namen Celogen™ der Firma Chemtura erhältlich. Ebenfalls geeignet sind physikalische Treib¬mittel, wie sie unter dem Handelsnamen Expancel™ der Firma Akzo Nobel vertrieben werden.

Besonders geeignete Treibmittel (**TM**) sind solche, wie sie unter dem Handelsnamen Expancel™ der Firma Akzo Nobel oder Celogen™ der Firma Chemtura oder Luvopor der Firma Lehmann und Voss erhältlich sind.

Die Menge des Treibmittels (**TM**) beträgt insbesondere 0.1 - 3 Gewichts-%, bezogen auf das Gewicht der hitzehärtenden Granulatmischung.

Es ist durchaus auch möglich mehrere Treibmittel (**TM**) einzusetzen. Die können entweder zusammen Teil des gleichen Granulates sein oder getrennt sowohl im ersten (**G1**) als auch im zweiten (**G2**) Granulat eingesetzt werden.

Das erste (**G1**) und/oder zweite (**G2**) Granulat können weitere Bestandteile aufweisen.

Beispielsweise sind dies Schlagzähigkeitsmodifikatoren (**SM**), wie sie für den Einsatz von hitzehärtenden Epoxidharzzusammensetzungen dem Fachmann bereits bestens bekannt sind.

Insbesondere sind dies feste Schlagzähigkeitsmodifikatoren, welche ein Blockcopolymer (**SM1**) sind. Das Blockcopolymer (**SM1**) wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere (**SM1**) sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Schlagzähigkeitsmodifikator (**SM**) ein Core-Shell Polymer (**SM2**). Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten.

Ebenso geeignet sind nanosklaige Silikate in Epoxid-Matiix, wie sie unter dem Handelnamen Nonopox von Nanoresins AG, Deutschland, angeboten werden.

In einer weiteren Ausführungsform ist der Schlagzähigkeitsmodifikator (**SM**) ein Umsetzungsprodukt (**SM3**) eines carboxylierten festen Nitrilkautschuks mit überschüssigem Epoxidharz, insbesondere wie sie unter dem Handelsnamen Struktol® von Schill + Seillacher, Deutschland, kommerziell vertrieben werden.

Der Anteil des vorgängig beschriebenen von Schlagzähigkeitsmodifikatoren (**SM**) beträgt vorzugsweise 1 - 45 Gew.-%, insbesondere 3 - 35 Gew.-%, am Gewicht der hitzehärtenden Granulatmischung.

Die hitzehärtende Granulatmischung kann selbstverständlich noch andere Bestandteile umfassen. Insbesondere sind dies Füllstoffe (**F**), sowie Katalysatoren, Stabilisatoren, insbesondere Hitze- und/oder Lichtstabilisatoren, Thixotropiermittel, Weichmacher, Lösungsmittel, mineralische oder organische Füllstoffe, Farbstoffe und Pigmente, Korrosionsschutzmittel, Tenside, Entschäumer und Haftvermittler.

Bei den Füllstoffen (**F**) handelt es sich hierbei bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente und Fasern, insbesondere Glasfasern. Als Füllstoff (**F**) sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs (**F**) 3 - 50 Gewichts-%, vorzugsweise 5 - 35 Gewichts-%, insbesondere 5 - 25 Gewichts-%, bezogen auf das Gewicht der gesamten hitzehärtenden Granulatmischung.

Die hitzehärtenden Granulatmischung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Farbstoffe und Pigmente, Korrosionsschutzmittel, Tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie Butylhydroxytoluol (BHT) oder Wingstay® T (Elikem), sterisch gehinderte Amine oder N-Oxylverbindungen wie TEMPO (Evonik).

Bevorzugt besteht die hitzehärtende Granulatmischung aus dem ersten Granulat (**G1**) und dem zweiten, epoxidfreies, Granulat (**G2**).

Es hat sich als vorteilhaft erwiesen, wenn das Granulat (**G1**) und/oder das Granulat (**G2**) einen mittleren Durchmesser von kleiner als 5 mm, insbesondere von zwischen 1 und 4 mm, aufweist.

Die Granulate lassen sich auf verschiedene Arten und Weise herstellen. In einer Variante wird das für die Herstellung des ersten Granulats (**G1**) notwendige Epoxid-Festharz (**A**) durch Erhitzen aufgeschmolzen. Hierbei sollte die Temperatur nicht allzu hoch sein. Es ist empfehlenswert, wenn die Temperatur nicht mehr als 10K über der Schmelztemperatur des Epoxid-Festharzes (**A**) liegt. Zur Schmelze werden dann unter Rühren allenfalls weitere Bestandteile des ersten Granulates (**G1**) hinzugegeben. Die Schmelze wird anschliessend abgekühlt und anschliessend oder während dem Abkühlen zerkleinert, z.B. durch eine sich drehende Lochscheibe oder gemahlen, so dass ein Granulat entsteht.

Für das zweite, epoxidfreie, Granulat (**G2**) kann der ersten Variante der Herstellung entsprechend vorgegangen werden, indem der bei Raumtemperatur feste Thermoplast (**T**) aufgeschmolzen wird, zu dem dann die weiteren Bestandteile des zweiten, epoxidfreien, Granulates (**G2**) unter Rühren hinzugegeben werden.

In einer weiteren Variante der Herstellung für das erste Granulat (**G1**) und//oder zweite Granulat (**G2**) werden die Bestandteile einem Extruder zugeführt, mit einem Mischmittel, z.B. mittels einer Schnecke, unter Erhitzen miteinander vermengt und extrudiert. Anschliessend oder während dem Extrudieren wird das Extrudat zerkleinert, so dass ein Granulat entsteht.

Insbesondere bevorzugt ist beim zweiten, epoxidfreien, Granulat (**G2**), wenn der äusserste Bereich des Granulates kein Dicyandiamid aufweist. Dies wird insbesondere auf zwei Arten ermöglicht. In der ersten Variante wird das zweite, epoxidfreie, Granulat (**G2**) mit Pulver des bei Raumtemperatur festen Thermoplast (**T**) unter leichtem Erwärmen kontaktiert. Die Temperatur sollte hierbei vorzugsweise so gewählt werden, dass der Thermoplast (**T**) lediglich leicht klebrig wird. Dies erfolgt insbesondere in einem Tumbler. In der zweiten Variante wird das zweite, epoxidfreie, Granulat (**G2**) mit einer Schmelze oder einer Lösung von bei Raumtemperatur festen Thermoplasten (**T**) besprüht.

In beiden Varianten bildet sich an der Oberfläche des zweiten, epoxidfreien, Granulates (**G2**) eine Schicht von bei Raumtemperatur festen Thermoplast (**T**). Derartige beschichtete zweite, epoxidfreie, Granulate (**G2**) weisen gegenüber unbeschichteten zweiten, epoxidfreien, Granulaten (**G2**) über noch gesteigerte Langzeitlagerbeständigkeiten.

Es ist bevorzugt, dass die Aktivierungstemperatur des hitzeaktivierbaren Treibmittels (**TM**) und des hitzeaktivierbaren Beschleunigers (**B**) sich nicht allzu stark voneinander unterscheiden, d.h. dass sie sich typischerweise nicht um mehr als 30 K, insbesondere nicht mehr als 20 K, vorzugsweise nicht mehr als 10 K, unterscheiden und vorzugsweise in etwa gleich sind.

Die Herstellung der Granulatmischung erfolgt durch das Mischen des separat von einander hergestellten ersten Granulates (**G1**) und zweiten Granulates (**G2**). Das Mischen erfolgt typischerweise durch volumetrische oder gravimetrische Zudosierung mittels geeigneten Dosiermitteln unter intensivem Rühren. Dies kann beispielsweise in einem Tumbler erfolgen. Die so erhaltene hitzehärtende Granulatmischung kann abgepackt werden und gelagert werden. Übliche Verpackungen, bzw. Behälter, für derartige hitzehärtende Granulatmischungen sind Beutel, Plastiksäcke, Büchsen, Kanister, Kessle, Hobbocks, Fässer, Bigbags oder Silos. Die Granulatmischungen sind vorzugsweise mischungsstabil, d.h. vorzugsweise entmischen die zwei Granulate (**G1,G2**) auch bei längeren Lagerzeiten nicht oder zumindest nur geringfügig. Falls ein derartiges Entmischen der Granulate jedoch trotzdem erfolgt, ist es angezeigt, vor dem Verwenden der hitzehärtende Granulatmischung diese nochmals aufzumischen, um eine homogene Verteilung des ersten Granulates (**G1**) und des zweiten Granulates (**G2**) in der Granulatmischung zu gewährleisten.

Es ist besonders bevorzugt, dass das Gewichtsverhältnis von hitzeaktivierbaren Beschleuniger (**B**) zu bei Raumtemperatur festem Thermoplast (**T**) einen Wert von kleiner als 0.20, insbesondere zwischen 0.01 und 0.15, bevorzugt zwischen 0.05 und 0.1, beträgt.

Beide Granulate, d.h. das erste Granulat (**G1**) und das zweite, epoxidfreie, Granulat (**G2**), sind für sich lagerstabil. Wesentlich ist jedoch, dass vor allem die Granulat-Mischung von erstem Granulat (**G1**) und zweitem, epoxidfreiem, Granulat (**G2**), als solche lagerstabil ist.

Es ist weiterhin bevorzugt, dass das Gewichtsverhältnis von hitzeaktivierbaren Beschleuniger, dass das Gewichtsverhältnis von erstes Granulat (**G1**) zu zweitem, epoxidfreiem, Granulat (**G2**) einen Wert von 99 : 1 bis 70 : 30, bevorzugt 90 : 10 bis 80 : 20, beträgt.

Die hitzehärtende Granulatmischung ist besonders geeignet für das Herstellen von Formteilen, welche dann ihrerseits geschäumt werden können und als Strukturschäume eingesetzt werden können.

So stellt ein Verfahren zur Herstellung eines Formteils einen weiteren Aspekt der vorliegenden Erfindung dar. Dieses Verfahren zur Herstellung eines Formteils umfasst die Schritte

i) Zuführen einer hitzehärtenden Granulatmischung, wie sie vorgängig beschrieben wurde, in ein erwärmbares Fördermittel

ii) Erwärmen der Granulatmischung auf eine Temperatur, welche über der Erweichungstemperatur der Granulatmischung und aber unter der Aktivierungstemperatur des Treibmittels (**TM**) liegt und welche unterhalb der Aktivierungstemperatur des hitzeaktivierbaren Beschleunigers (**B**) liegt unter Bildung einer pastösen hitzehärtenden Zusammensetzung

iii) Einbringen in eine Form oder Extrudieren eines Formteils
iv) Abkühlen des Formkörpers auf Raumtemperatur.

Als erwärmbares Fördermittel ist insbesondere eine Transportschnecke eines Extruders, welche im vorderen Bereich, d.h. insbesondere im Austrittsbereich, erhitzt wird, zu verstehen.
Durch das Erwärmen schmilzt das Granulat auf und es bildet sich eine weiche pastöse Zusammensetzung, welche formbar ist. Die erwärmte hitzehärtenden Zusammensetzung wird in Schritt iii) entweder in eine Form eingebracht oder wird extrudiert. Hierdurch ergibt sich beim Abkühlen in Schritt iv) ein Formteil, welches weitgehend formstabil ist.
Das Einbringen in eine Form kann beispielsweise ein Eingiessen darstellen. Die Form kann eine offene oder eine geschlossene Hohlform sein. Bevorzugt erfolgt das Einbringen unter Druck.
In einer bevorzugten Ausführungsform ist das Formteil ein Spritzguss-Formteil. Das Einbringen erfolgt hierbei durch Einspritzen unter Druck.
In einer Ausführungsform wird die Granulatmischung unmittelbar vor Schritt i) durch den Schritt des Mischens vom ersten Granulat (**G1**) und vom zweiten, epoxidfreien, Granulat (**G2**) erzeugt.
Die Mischung von erstem Granulat (**G1**) und zweitem, epoxidfreien, Granulat (**G2**) kann auch unmittelbar vor dem Spritzgussverfahren erfolgen. Dabei wird vorzugsweise eine Förderschnecke installiert, welche die Granulatmischung optimal in die Schnecke der Spritzgussmaschine dosiert.
In einer besonders bevorzugten Ausführungsform wird in Schritt iv) das Formteil extrudiert.
Insbesondere bevorzugt weist das Formteil ein Trägerteil auf, welches in Schritt iii) die pastöse hitzehärtenden Zusammensetzung aufgebracht wird.
Dies erfolgt insbesondere durch ein Aufextrudieren.
Aus dem beschriebenen Verfahren resultiert ein Formteil.
Diese so gebildeten Formteile sind formstabil, können problemlos gelagert und transportiert werden. Besonders bevorzugt werden derartige Formteile industriell in einer gewünschten Form hergestellt und können bei Bedarf an einen Kunden geliefert werden.
Derartige Formteile sind insbesondere solche wie sie als Baffle (akustisch dämpfendes, expandierbares Formteil) oder Reinforcer (versteifendes, expandierbares Formteil, z. B. bestehend aus Trägermaterial wie Polyamid und Epoxy basierender schäumbare Formulierung) für den Fahrzeugbau verwendet werden. Derartige Teile werden beim Fahrzeugbau an einen gewünschten Ort eingebracht bzw. befestigt und schotten Hohlräume ab bzw. verstärken Strukturen. Insbesondere werden derartige Formteile im Karosserie-Rohbau verwendet und erhalten durch Erwärmung ihre Endfestigkeit und Endstruktur indem sie, beispielsweise im KTL-Ofen (KTL = **K**athodische **T**auch-**L**ackierung), erhitzt werden. Durch die Erhitzung wird aufgrund des in der Granulatmischung, beziehungsweise pastösen hitzehärtenden Zusammensetzung, bzw. im Formteil, vorhandenen Treibmittels insbesondere ein Schaum gebildet. Dies erfolgt durch Erhitzen des Formteils auf eine Temperatur, welche bei oder über der Aktivierungstemperatur des hitzeaktivierbaren Treibmittels (**TM**) liegt. Die Aushärtung erfolgt durch Erwärmen auf einen Temperatur, welche bei oder über der Aktivierungstemperatur des hitzeaktivierbaren Beschleunigers (**B**) liegt.
Die Erhitzung des Formteils erfolgt vorzugsweise auf eine Temperatur von zwischen 130 und 190°C, insbesondere zwischen 140 und 160°C.
In einem weiteren Aspekt betrifft die vorliegende Erfindung ein Verfahren zur Herstellung eines strukturellen Schaumes. Dieses Verfahren umfasst den Schritt

I) Erwärmen einer hitzehärtenden Granulatmischung) oder eines Formteils, wie sie vorgängig beschrieben wurden, auf eine Temperatur, welche über der Aktivierungstemperatur des hitzeaktivierbaren Treibmittels (**TM**) liegt.

In einem weiteren Aspekt betrifft die vorliegende Erfindung ein Verfahren zur Verstärkung von Hohlstrukturen umfassend die Schritte

α) Einführen einer hitzehärtenden Granulatmischung oder eines Formteils, wie sie vorgängig beschrieben wurden, in eine Hohlstruktur;
β) Erwärmen der hitzehärtenden Granulatmischung oder des Formteils auf eine Temperatur, welche über der Aktivierungstemperatur des hitzeaktivierbaren Treibmittels (**TM**) liegt;
γ) Ausbilden eines Schaumes;
δ) Aushärten des Schaumes,

wobei der Schritte γ) und δ) zeitgleich oder zeitlich versetzt voneinander abfolgen.
Als Hohlstrukturen sind insbesondere tragende Hohlstrukturen, insbesondere die dem Fachmann geläufigen A-, B- und C-Säulen einer Fahrzeugkarosserie. Diese sind strukturelle Elemente der Karosserie, so dass deren Stabilität eine wesentliche, sicherheitsrelevante, Rolle zukommt. Der Schaum verstärkt aufgrund der Haftung mit der Hohlstruktur

die mechanischen Eigenschaften der Hohlstruktur. Einerseits ist die Verwendung eines so gebildeten Schaumes vorteilhaft, weil aufgrund der geringen Dichte eine erhebliche Gewichtsreduktion im Vergleich zur Verwendung eines nicht geschäumten Dichtstoffes erfolgt. Des Weiteren erfolgt durch den Schaum auch eine starke Geräuschreduktion und weist eine Dämmwirkung auf.

Aus dem beschriebenen Verfahren resultiert eine verstärkte Hohlstruktur.

Somit kann das vorgängig beschriebene Formteil zur Herstellung von verstärkten Strukturen verwendet werden.

Die verstärkte Struktur ist insbesondere eine Fahrzeugkarosse oder ein Teil einer Fahrzeugkarosse.

## Beispiele

Es wurden aus den in Tabelle 1 angegebenen Bestandteilen die entsprechenden Granulate hergestellt, indem das Epoxidfestharz, bzw. der Thermoplast, in einem Extruder der Firma OMC aufgeschmolzen und gemischt und anschliessend in einer Mühle auf einen Granulatdurchmesser von <=2mm zerkleinert wurden. Der Temperaturbereich im Extruder wurde zwischen 30°C (am ersten Einlass) und 95°C an der Düse gewählt. Die Drehzahl des Doppelschneckenextruders wurde auf 250 U/min eingestellt.

90.4 Gewichtsteile des Granulates ***G1-1*** wurden mit 9.6 Gewichtsteile des epoxidfreien Granulates ***G2-1*** mittels eines Tumblers gemischt. Diese so erhaltene homogene Granulatmischung ***G1+2*** wurde verglichen mit dem Granulat ***Gref.***

## *Messmethoden*

### Lagerstabilität

Zur Bestimmung der Lagerstabilität wurde die Viskosität ($\eta_0$) der Zusammensetzung unmittelbar nach Herstellung gemessen. Es erfolgte jeweils eine Messung mit $\omega$ = 1 rad/s und $\omega$ = 10 rad/s. Anschliessend wurde das Granulat ***Gref,*** beziehungsweise die Granulatmischung ***G1+2,*** während 16 Tagen bei 60°C im Umluftofen gelagert und nach Abkühlung auf Raumtemperatur wurde die Viskosität wiederum gemessen ($\eta_{16d,\ 60°C}$). Als Mass der Lagerstabilität wurde die Viskositätsänderung gemäss folgender Formel ermittelt und in % in Tabelle 2 angegeben:

$$\Delta_{visc,\ 16d\ 60°C} = (\eta_{16d,\ 60°C} / \eta_0) - 1$$

Eine hohe Viskositätsänderung ist ein Zeichen für eine ungenügende Lagerstabilität. Eine Viskositätsänderung von mehr als 100 % ist ungenügend.

Tabelle 1 Granulat-Zusammensetzungen (Angaben in Gewichtsteilen)

| | Funktion7 | ***G1-1*** | ***G2-1*** | ***Gref*** |
|---|---|---|---|---|
| Araldite® GT7071[1] | A | 21.78 | | 21.78 |
| Springfield SP-6202[2] | A/F | 4.73 | | 4.73 |
| Toughener[3] | A/SM | 40.00 | | 40.00 |
| Glasfasern (3mm) | F | 9.50 | | 9.50 |
| Aerosil® R202[4] | F | 2.72 | | 2.72 |
| Kreide | F | 2.17 | | 2.17 |
| Talk | F | 2.00 | | 2.00 |
| Glashohlkugeln | F | 7.50 | | 7.50 |
| Marcus M200[5] | T | | 6.80 | 6.80 |
| Dicyandiamid | | | 1.36 | 1.36 |
| N,N-Dimethylharnstoff | B | | 0.42 | 0.42 |
| 4,4'-Oxybis(benzolsulfonhydrazid) | TM | | 0.52 | 0.52 |

(fortgesetzt)

| | Funktion7 | ***G1-1*** | ***G2-1*** | ***Gref*** |
|---|---|---|---|---|
| Expancel[6] | TM | | 0.50 | 0.50 |
| Total | | 90.4 | 9.6 | 100.00 |

[1]Epoxidfestharz
[2]Epoxidfestharz/Aramidfaser-Mischung (20 % Fasergehalt)
[3]Mischung 70% Epoxidfestharz, 10% Epoxy-Novolak, 20% Reaktionsprodukt von carboxylierterminerten Acrylonitril-Kautschuk (HyproTM X13 CTBN) und Epoxidfestharz und Bisphenol-A in Gegenwart von Triphenylphosphin)
[4]Pyrogene Kieselsäure
[5]Polyethylen mit Molekulargewicht Mn von 1100 g/mol (bestimmt via GPC)
[6]Microspherese, Blähmittel Isooctan, Isobutan, Durchmesser ca. 30 Mikrometer, Aktivierungstemperatur 120°C (Tstart)
[7]A=Epoxydfestharz, F=Füllstoff, SM=Schlagzähigkeitsmodifikator, T=Thermoplast, B=hitzeaktivierbarer Beschleuniger, TM= hitzeaktivierbares Treibmittel

**Expansionsvermögen**

Zur Bestimmung der Lagerstabilität wurde vom Granulat ***Gref***, beziehungsweise der Granulatmischung ***G1+2***, mittels eines Extruders eine Platte von 3 mm Dicke und 25 mm Breite ausextrudiert. Davon wurden nach dem Abkühlen auf Raumtemperatur 25 mm lange Plättchen abgeschnitten. Das Volumen dieser Plättchen wurde durch mittels Wasserverdrängung gemessen ($V_0$). Anschliessend wurde die Platte während 20 Minuten in einen Umluftofen bei 150°C erwärmt. Bei dieser Erwärmung schäumte das Formteil auf. Nach dem Erkalten wurde das Volumen des Schaumes wiederum mittels Wasserverdrängungsmethode gemessen ($V_{expand}$). Als Mass des

Expansionsvermögens wurde die Volumenvergrösserung gemäss folgender Formel ermittelt und in % in Tabelle 2 angegeben:

$$\Delta_{vol,\ 20\ min\ 150°C} = (V_{expand} / V_0)-1$$

Tabelle 2: Gemessene Eigenschaften.

| | ***G1+2*** | ***$G_{ref}$*** |
|---|---|---|
| $\omega$ = 1 rad/s | | |
| $\eta_0$ [Pa•s] | 1'771 | 7'198 |
| $\eta_{16d,\ 60°C}$[Pa•s] | 2'070 | 331'000 |
| $\Delta_{VISC,}$ 16d $_{60°C}$[%] | 17 | 4498 |
| $\omega$ = 10 rad/s | | |
| $\eta_0$[Pa•s] | 792 | 2'731 |
| $\eta_{16d,\ 60⌋X}$[Pa•s] | 945 | 120'800 |
| $\Delta_{VISC}$, 16d $_{60°C}$[%] | 19 | 4323 |
| $\Delta_{vol}$, 20 min 150°C | 125 | 135 |

Die Ergebnisse aus Tabelle 2, welche jeweils ein Mittelwert einer Dreifachbestimmung sind, zeigen in eindrücklicher Art und Weise, dass das die Granulatmischung ***G1+2*** eine ausserordentlich gute Lagerstabilität aufweist, während dies beim Vergleichsgranulat mit denselben Inhaltsstoffen ***$G_{ref}$*** nicht der Fall ist. Es zeigt sich jedoch auch, dass ***G1+2*** ein mit dem Vergleichsgranulat ***$G_{ref}$*** vergleichbares (im Rahmen der Messgenauigkeit gleiches) Expansionsvermögen aufweist.

**Patentansprüche**

1. Hitzehärtende Granulatmischung umfassend mindestens

   a) ein erstes Granulat (**G**1) umfassend

      - mindestens ein Epoxid-Festharz (**A**) mit durchschnittlich mehr als einer Epoxidgruppe pro Molekül;

   b) ein zweites, epoxidfreies, Granulat (**G2**) umfassend

      - mindestens einen hitzeaktivierbaren Beschleuniger (**B**) für die Härtung von Epoxid-Festharz (**A**) mit Dicyandiamid,
      - mindestens ein bei Raumtemperatur fester Thermoplast (**T**) mit einem Erweichungspunkt von zwischen 70°C und 140°C gemessen nach der Ring & Kugel-Methode gemäss DIN EN 1238;

   c) Dicyandiamid, welches Teil des ersten (**G1**) und/oder des zweiten (**G2**) Granulates ist; sowie
   d) mindestens ein hitzeaktivierbaren Treibmittel (**TM**), welches unabhängig von einander Teil des ersten (**G1**) und/oder des zweiten (**G2**) Granulates ist.

2. Hitzehärtende Granulatmischung gemäss Anspruch 1, **dadurch gekennzeichnet, dass** das Granulat (**G1**) und/oder das Granulat (**G2**) einen mittleren Durchmesser von kleiner als 5 mm, insbesondere von zwischen 1 und 4 mm, aufweist.

3. Hitzehärtende Granulatmischung gemäss Anspruch 1 oder 2, **dadurch gekennzeichnet, dass** das Gewichtsverhältnis von hitzeaktivierbaren Beschleuniger (**B**) zu bei Raumtemperatur festem Thermoplast (**T**) einen Wert von kleiner als 0.20, insbesondere zwischen 0.01 und 0.15, bevorzugt zwischen 0.05 und 0.1, beträgt.

4. Hitzehärtende Granulatmischung gemäss einem der vorhergehenden Ansprüche, **dadurch gekennzeichnet, dass** das Gewichtsverhältnis von erstes Granulat (**G1**) zu zweitem, epoxidfreiem, Granulat (**G2**) einen Wert von 99 : 1 bis 70 : 30, bevorzugt 90 : 10 bis 80 : 20, beträgt.

5. Verfahren zur Herstellung eines Formteils umfassend die Schritte

   i) Zuführen einer hitzehärtenden Granulatmischung gemäss einem der Ansprüche 1 bis 4 in ein erwärmbares Fördermittel
   ii) Erwärmen der Granulatmischung auf eine Temperatur, welche über der Erweichungstemperatur der Granulatmischung und aber unter der Aktivierungstemperatur des Treibmittels (**TM**) liegt und welche unterhalb der Aktivierungstemperatur des hitzeaktivierbaren Beschleunigers (**B**) liegt unter Bildung einer pastösen hitzehärtenden Zusammensetzung
   iii) Einbringen in eine Form oder Extrudieren eines Formteils
   iv) Abkühlen des Formkörpers auf Raumtemperatur.

6. Verfahren gemäss Anspruch 5, **dadurch gekennzeichnet, dass** die Granulatmischung unmittelbar vor Schritt i) durch den Schritt des Mischens vom ersten Granulat (**G1**) und vom zweiten, epoxidfreien, Granulat (**G2**) erzeugt wird.

7. Verfahren gemäss Anspruch 5 oder 6, **dadurch gekennzeichnet, dass** das Formteil ein Spritzguss-Formteil ist.

8. Verfahren gemäss einem der Ansprüche 5 bis 7, **dadurch gekennzeichnet, dass** das Formteil ein Trägerteil aufweist, auf welches in Schritt iii) die pastöse hitzehärtenden Zusammensetzung (3) aufgebracht wird.

9. Formteil hergestellt nach einem Verfahren gemäss einem der Ansprüche 5 bis 8.

10. Verfahren zur Herstellung eines strukturellen Schaumes umfassend den Schritt

   I) Erwärmen einer hitzehärtenden Granulatmischung gemäss einem der Ansprüche 1 bis 4 oder eines Formteils gemäss Anspruch 9 auf eine Temperatur, welche über der Aktivierungstemperatur des hitzeaktivierbaren Treibmittels (**TM**) liegt.

**11.** Verfahren zur Verstärkung von Hohlstrukturen umfassend die Schritte

α) Einführen einer hitzehärtenden Granulatmischung gemäss einem der Ansprüche 1 bis 4 oder eines Formteils gemäss Anspruch 9 in eine Hohlstruktur;
β) Erwärmen der hitzehärtenden Granulatmischung oder des Formteils auf eine Temperatur, welche über der Aktivierungstemperatur des hitzeaktivierbaren Treibmittels (**TM**) liegt;
γ) Ausbilden eines Schaumes;
δ) Aushärten des Schaumes,

wobei der Schritte γ) und δ) zeitgleich oder zeitlich versetzt voneinander abfolgen.

**12.** Verstärkte Hohlstruktur erhalten nach einem Verfahren gemäss Anspruch 11.

**13.** Verwendung eines Formteils gemäss Anspruch 9 zur Herstellung von verstärkten Strukturen.

**14.** Verwendung gemäss Anspruch 13, **dadurch gekennzeichnet, dass** die verstärkte Struktur eine Fahrzeugkarosse oder ein Teil einer Fahrzeugkarosse ist.

Europäisches Patentamt
European Patent Office
Office européen des brevets

# EUROPÄISCHER RECHERCHENBERICHT

Nummer der Anmeldung
EP 10 19 6967

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br><br>Y | EP 2 182 025 A1 (SIKA TECHNOLOGY AG [CH]) 5. Mai 2010 (2010-05-05)<br>* Seite 12, Zeile 30 - Zeile 33 *<br>* Seite 15; Tabelle 2 *<br>----- | 5-14<br><br>1-4 | INV.<br>C08G59/40<br>C08G59/68<br>C08L63/00<br>B32B3/26<br>C08J5/08<br>C08J9/22<br>C09J163/00 |
| Y | WO 2007/004184 A1 (SIKA TECHNOLOGY AG [CH]; ROSENBERG STEVEN [US]; KOW CHEONG [US]; HOEFF) 11. Januar 2007 (2007-01-11)<br>* Ansprüche 1,6,17 *<br>* Seite 9, Absatz 47 *<br>* Seite 11 - Seite 12; Tabelle 1 *<br>* Seite 12 - Seite 13; Tabelle 3 *<br>----- | 1-14 | |
| Y | EP 2 060 592 A1 (SIKA TECHNOLOGY AG [CH]) 20. Mai 2009 (2009-05-20)<br>* Ansprüche 1,12,20,22-25 *<br>* Seite 19 - Seite 21; Tabellen 1,2 *<br>----- | 1-14 | |
| A | EP 2 128 182 A1 (SIKA TECHNOLOGY AG [CH]) 2. Dezember 2009 (2009-12-02)<br>* Ansprüche 1,17-20 *<br>----- | 1-14 | RECHERCHIERTE SACHGEBIETE (IPC) |
| A | EP 1 916 285 A1 (SIKA TECHNOLOGY AG [CH]) 30. April 2008 (2008-04-30)<br>* Seite 11, Absatz 39 *<br>* Seite 19, Absatz 81 *<br>* Seite 14, Absatz 56 - Seite 15, Absatz 57 *<br>* Ansprüche 29,32 *<br>----- | 1-14 | C08G<br>C08L<br>B32B<br>C08J<br>C09J |

Der vorliegende Recherchenbericht wurde für alle Patentansprüche erstellt

1

| Recherchenort | Abschlußdatum der Recherche | Prüfer |
|---|---|---|
| München | 24. Juni 2011 | Mill, Sibel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 19 6967

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2011

| Im Recherchenbericht angeführtes Patentdokument | Datum der Veröffentlichung | Mitglied(er) der Patentfamilie | Datum der Veröffentlichung |
|---|---|---|---|
| EP 2182025 A1 | 05-05-2010 | AT 483751 T | 15-10-2010 |
| | | CN 101724225 A | 09-06-2010 |
| | | KR 20100048943 A | 11-05-2010 |
| | | US 2010108258 A1 | 06-05-2010 |
| WO 2007004184 A1 | 11-01-2007 | CA 2613762 A1 | 11-01-2007 |
| | | CN 101233167 A | 30-07-2008 |
| | | EP 1966267 A1 | 10-09-2008 |
| | | JP 2008545039 T | 11-12-2008 |
| EP 2060592 A1 | 20-05-2009 | AT 456596 T | 15-02-2010 |
| | | CN 101861345 A | 13-10-2010 |
| | | WO 2009063043 A1 | 22-05-2009 |
| | | JP 2011503315 T | 27-01-2011 |
| | | US 2010273005 A1 | 28-10-2010 |
| EP 2128182 A1 | 02-12-2009 | CN 102037050 A | 27-04-2011 |
| | | EP 2285862 A1 | 23-02-2011 |
| | | WO 2009150059 A1 | 17-12-2009 |
| | | US 2011067813 A1 | 24-03-2011 |
| EP 1916285 A1 | 30-04-2008 | AT 453674 T | 15-01-2010 |
| | | CN 101528797 A | 09-09-2009 |
| | | EP 2084200 A1 | 05-08-2009 |
| | | WO 2008049860 A1 | 02-05-2008 |
| | | JP 2010507709 T | 11-03-2010 |
| | | US 2010035041 A1 | 11-02-2010 |

EPO FORM P0461

Für nähere Einzelheiten zu diesem Anhang : siehe Amtsblatt des Europäischen Patentamts, Nr.12/82